# EUROPÄISCHE PATENTSCHRIFT

(11) **EP 3 072 615 B1**
(45) Veröffentlichungstag und Bekanntmachung des Hinweises auf die Patenterteilung: **13.05.2020**
(21) Anmeldenummer: 16160543.1
(22) Anmeldetag: 15.03.2016
(51) Int. Cl.: B23C 3/12, B23C 5/08

(54) **FRÄSKOPF**
MILLING HEAD
TETE DE FRAISAGE

(30) Priorität: 24.03.2015 DE 202015101493 U
(43) Veröffentlichungstag der Anmeldung: 28.09.2016
(73) Patentinhaber: Urban GmbH & Co. Maschinenbau KG, 87700 Memmingen (DE)
(72) Erfinder: Hiebeler, Stefan, 87463 Dietmannsried (DE)
(74) Vertreter: Patentanwälte Olbricht, Buchold, Keulertz Partnerschaft mbB

(56) Entgegenhaltungen:
- DE-A1- 19 711 938
- DE-A1-102006 048 762
- DE-A1-102007 001 864
- DE-A1-102012 107 750
- DE-U1-202015 004 924
- FR-A1- 2 909 018
- US-A1- 2007 237 588
- US-A1- 2009 060 667
- US-A1- 2010 135 740
- US-A1- 2014 161 543
- US-A1- 2015 078 853
- US-B1- 6 227 267

## Beschreibung

Die Erfindung betrifft einen Fräskopf für die spanabhebende Bearbeitung von Werkstücken, gemäß dem Oberbegriff des Anspruchs 1. Ein solcher Fräskopf ist aus der US 6 227 267 B1 bekannt.

Bei der Bearbeitung von Profilen, und hierbei insbesondere von gekammerten Kunststoffprofilen für die Herstellung von Fenstern und Türen werden Fräser eingesetzt. Dabei wird der Bearbeitungsraum nicht unerheblich mit Spänen verunreinigt, was aber unproblematisch ist, da diese in der Regel nach unten wegfallen können und bislang nicht störten. Daher war es im Stand der Technik auch bekannt, solche fräsende Bearbeitungen räumlich getrennt von Maschinen, die Schweißaufgaben ausführen, aufzustellen, wodurch hier keine Gefahr der Verunreinigung durch herumfliegende Späne, die an dem Heizspiegel anhaften können, besteht. Im Stand der Technik werden Kunststofffensterrähmen durch einen Schweißprozess hergestellt, bei welchem die auf das entsprechende Maß abgelängte Kunststoffprofilstücke an ihren Endbereiche verschweißt werden.

Des Weiteren werden in diesem Bereich der Technik (Herstellung von Kunststofffenster) Fräser nur einfach eingesetzt, d. h. mit einem Fräswerkzeug wird nur ein Werkstück bearbeitet.

Aus US 6,227,267 B1 ist eine Fräsvorrichtung zum Abtkanten von Baumstämmen bekannt. Diese Fräsvorrichtung weist Spankanäle auf, die geschnittene Späne vom Werkstück wegführen. Die offenbarte Vorrichtung ist jedoch nicht geeignet zur stirnseitigen Bearbeitung von Kunststoffprofilen.

DE 10 2006 048 762 A1 offenbart ein einfaches Schleif- oder Fräswerkzeug bei welchem geschnittene Späne durch Turbinenschaufeln abgeleitet werden.

US 2009/0060667 A1 zeigt und beschreibt ein Schneidwerkzeug, bei dem benachbart zu den eigentlichen Schneiden ein Schaufelrad angeordnet ist, welches einen Luftstrom zur Abführung der geschnittenen Späne erzeugt. Das offenbarte Schneidwerkzeug ist jedoch nicht geeignet zur stirnseitigen Bearbeitung von Kunststoffprofilen.

Aufgabe der vorliegenden Erfindung ist es, diesen Stand der Technik zu verbessern und insbesondere die Herstellung von Kunststofffenster effizienter zu gestalten.

Diese Aufgabe wird gelöst durch einen Fräskopf gemäß Anspruch 1, sowie eine Bearbeitungsmaschine gemäß Anspruch 12. Vorteilhafte Weiterbildungen sind Gegenstand der abhängigen Ansprüche.

Die Erfindung stellt einen Fräskopf für die spanabhebende Bearbeitung von Werkstücken zur Verfügung. Dieser umfasst zwei zueinander parallel angeordnete Fräser wobei die Fräser für die spanabhebende Bearbeitung von Werkstücken jeweils, mindestens eine Rotationsachse und wenigstens einen Schneidenträger mit mindestens einer Schneidkante umfassen, wobei an den Fräsern jeweils wenigstens ein eine Krümmung aufweisendes Schaufelelement vorgesehen ist und das Schaufelelement bei Rotation des jeweiligen Fräsers um seine Rotationsachse einen Luftstrom zur Abfuhr abgetragener Frässpäne erzeugt.

Um Frässpäne von den Schweißflächen weg zu transportieren, ist vorgesehen, dass an jedem Fräser wenigstens ein eine Krümmung aufweisendes Schaufelelement angeordnet ist. Vorteil hiervon ist, dass das Schaufelelement bei Rotation jedes Fräsers um die Rotationsachse einen Luftstrom zur Abfuhr abgetragener Frässpäne erzeugt. Durch diesen Luftstrom erfahren die Späne eine Beschleunigung in, bezogen auf die Rotationsachse, axialer Richtung. Die Bearbeitungsfläche und auch der Bearbeitungsraum sind somit frei von Spänen, da diese bereits bei der Entstehung durch den gleichzeitig erzeugten Luftstrom abgeleitet werden.

Da durch den erfindungsgemäßen Vorschlag die Verschmutzung einer mit einer entsprechenden Fräskopf ausgestatteten Bearbeitungsmaschine reduziert wird, wird bereits hierdurch ein Effizienzsteigerung erreicht. Eine solche Bearbeitungsmaschine muss seltener gereinigt werden, daher sinken die Reinigungskosten. Die Anordnung von zwei Fräsern parallel in dem Fräskopf (diese rotieren um eine gemeinsame oder unterschiedliche Rotationsachse/n) erlaubt es, mit einem Fräsvorgang zwei Werkstücke gleichzeitig zu bearbeiten, was in diesem Bereich eine Steigerung der Effizienz um 50 % darstellt!

Es wird aber auch das Verschmutzungsrisiko durch die Späne erheblich reduziert, und so überraschenderweise ermöglicht, dass in einer solch ausgestatteten Bearbeitungsmaschine auch Prozessschritte realisiert werden können, die üblicherweise nicht in einer spanerzeugenden Maschine vorgesehen werden, wie zum Beispiel das Verschweißen der Kunststoffprofile.

Jeder Fräser des Fräskopfes verfügt über eine Mantelfläche, an der der wenigstens eine Schneidenträger angeordnet ist. Dieser an der Mantelfläche bzw. dem Umfang jedes Fräsers angeordnete Schneidenträger trägt die Schneidkante. Bei Rotation des Fräsers kommt es zum Eingriff zwischen Schneidkante und Profil und dabei zum Materialabtrag. Durch die Positionierung des Fräsers relativ zum Profil bzw. der zur bearbeitenden Schweißfläche, die stirnseitig am Profil vorgesehen ist, werden im Zuge des Fräsvorgangs zum einen die im Profil vorhandenen Stege für den Schweißvorgang vorbereitet und des Weiteren Maßtoleranzen ausgeglichen. Es können somit Profile bzw. Profilabschnitte mit genau definierter Länge sowie klar definierte Schweißflächen zur Verfügung gestellt werden, die eine bevorzugt deckungsgenaue Verschweißung der Profile erlauben und zudem die Bildung eines Wulstes aufgrund der Verringerung des im Schweißverfahren aufgeschmolzenen Profil- d.h. Kunststoffmaterials reduzieren bzw. vermeiden. Somit trägt der erfindungsgemäße Fräskopf dazu bei, dass eine hochgenaue und damit stabile Verbindung zwischen den Profilabschnitten gebildet werden kann, da die Bearbeitungsgenauigkeiten wesentlich erhöht und die während bzw. durch das Schweißen auszugleichenden Toleranzen verringert werden.

Des Weiteren ist in dem Vorschlag vorteilhafter Weise vorgesehen, dass der Schneidenträger sich radial zur Rotationsachse erstreckt. Er ist alternativ auch an der Mantelfläche axial verlaufend vorsehbar.

In einer weiteren als günstig angesehenen Ausführungsform ist vorgesehen, dass der Schneidenträger an seiner radial orientierten Stirnfläche die Schneidkanten trägt. Durch entsprechende Bewegungssteuerung kann auch in dieser Ausführungsform eine Bearbeitung der Stirnfläche der Profile, die in der anschließenden Herstellung des fertigen Rahmens miteinander verschweißt werden sollen, erfolgen.

Eine vorteilhafte Weiterbildung sieht vor, dass am jeweiligen Fräser das Schaufelelement als sich am Schneidenträger radial erstreckend angeordnet ist. Hierdurch wird die bei Rotation der Fräser durch die Schaufelelemente generierte Sogwirkung weiter verbessert und eine noch effektivere Abführung der Frässpäne erreicht.

Der jeweilige Fräser des Fräskopfes ist erfindungsgemäß als Stirnplanfräser ausgebildet, der Schneiden an seiner dem zu bearbeitenden Profil zugewandten Stirnfläche aufweist. Hierdurch kann eine besonders gleichmäßige und saubere Bearbeitung der Oberfläche erfolgen. Aufgrund der erfindungsgemäßen Konfiguration des Fräsers kommen hierbei insbesondere die Schaufelelemente bzw. die hierdurch generierte Sogwirkung vorteilhaft zum Einsatz.

Der jeweilige Fräser des erfindungsgemäßen Fräskopfes weist an seiner Stirnseite bzw. seinem Umfang Schneidenträger und Schaufelelemente auf, die bevorzugt als gesonderte Elemente ausgebildet sind. Als günstig erweist es sich in diesem Zusammenhang, wenn diese Elemente im Wechsel am Fräser angeordnet vorgesehen sind. Eine in diesem Zusammenhang bevorzugte Ausführungsform sieht vor, dass Schneidenträger und Schaufelelemente in gleicher oder ungleicher Anzahl am Fräser vorgesehen sind. Über die Anzahl an Schneidenträgern bzw. Schaufelelementen kann die Fräsleistung bzw. die Sogwirkung eingestellt bzw. beeinflusst werden. Die Anzahl an Schneidenträgern bzw. Schaufelelementen richtet sich letztendlich nach Größe und Durchmesser des Fräsers sowie der vorgesehenen Bearbeitung und/oder dem zu bearbeitenden Material. Bevorzugt sind zwischen zwei Schneidenträger zwei oder mehr Schaufelelemente vorgesehen, ohne die Erfindung hierauf zu beschränken.

In einer alternativen, als günstig angesehenen Ausführungsform des Fräskopfes ist der Schneidenträger selbst als Schaufelelement ausgebildet oder weist einen als Schaufelelement dienenden Funktionsabschnitt auf. Hierbei wird die die Sogwirkung generierender Funktionalität mit der Funktionalität des Materialabtrags verbunden und in einem Element zusammengeführt. Vorteile ergeben sich hierbei bezüglich der Effizienz der Bearbeitung sowie hinsichtlich des Gleichlaufs des Fräsers auch bei hohen Rotationsgeschwindigkeiten.

In einer als vorteilhaft angesehenen Ausführungsform ist die bezogen auf die Stirnseite des jeweiligen Fräsers gesehene Abschlusskante des Schneidenträgers als Schneide ausgebildet. Alternativ hierzu kann diese Abschlusskante ein Schneidelement tragen, das bevorzugt austauschbar am Fräser angebracht ist. Dabei ist vorgesehen, dass entweder die Schneide oder das bevorzugt auswechselbare Schneidelement die Schneidkante aufweist. Vorteil dieser Ausgestaltungsform ist, dass zum einen eine gleichmäßige Abnutzung zum anderen eine vereinfachte Aufbereitung des Fräsers bei Verschleiß möglich wird.

Als günstig wird angesehen, wenn am oder im Schneidenträger unmittelbar eine Schneide ausgebildet ist.

Eine alternative, jedoch ebenfalls als vorteilhaft angesehene Ausführungsform des Fräskopfes sieht vor, dass das Schneidelement am Schneidenträger ein- oder aufsetzbar, insbesondere einklemmbar oder anschraubbar vorgesehen ist. Hierdurch ergeben sich Vorteile bei der Aufbereitung des Fräsers bei Verschleiß, da der Fräser mit Schneidenträger und gegebenenfalls Schaufelelementen als Einheit erhalten bleibt und lediglich die Schneideelemente ausgetauscht werden. Als vorteilhaft in diesem Zusammenhang erweist es sich des Weiteren, wenn das Schneidelement als Wendeschneidplatte mit wenigstens zwei Schneidkanten ausgebildet ist. Je nach zu bearbeitenden Material und durchzuführender Bearbeitung kann somit ein Grundkörper des Fräsers durch Auswahl geeigneter Wendeschneidplatte an die Bearbeitungsaufgabe angepasst werden. Auch ermöglicht die Verwendung von Wendeschneidplatte eine zügige Aufbereitung des Fräsers und somit kürzere Stillstandzeiten.

Eine als günstig angesehene Ausführungsform sieht vor, dass die Schneide in sich eben oder gewölbt ausgebildet ist. Die gewölbte Variante unterstützt bevorzugt den Transporteffekt bzw. die Sogwirkung.

In einer bevorzugten Weiterbildung ist vorgesehen, dass der Fräskopf einen Grundkörper aufweist, wobei Schneidenträger und Schaufelelemente am Umfang des Grundkörpers angeordnet sind. Der Grundkörper ist dabei bevorzugt zylindrisch ausgebildet, ohne aber andere Geometrien auszuschließen. Die Bearbeitung erfolgt über die Stirnseite des jeweiligen Fräsers (Stirnfräsen) oder, nicht erfindungsgemäß, über den Umfang des Fräsers. Entscheidend hierfür ist die Lage der Schneiden, die über deren Position am Schneidenträger definiert ist. Während beim Stirnfräsen die Schneiden an der Stirnseite die Bearbeitung durchführen, ist beim Umfangsfräsen eine Hauptschneide, die am Umfang des Fräsers angeordnet ist, für den Materialeingriff vorgesehen.

Das Schaufelelement ist bevorzugt in sich gekrümmt ausgebildet. Die gewählten Radien bei gekrümmten Schaufelelementen definieren dabei sowohl die Richtung als auch die Intensität des Soges. Durch die Schaufelelemente wird aufgrund der Rotation eine Luftansaugung durchgeführt, da durch die rotierenden Schaufelelemente die Luft gefördert und verdichtet wird. Hieraus ergibt sich eine Ansaug- und eine Druckseite des Fräsers bzw. Schaufelelementes, die letztlich zur Ausbildung des Saugstromes führt. Der Fräser weist hierbei eine im Wesentlichen einem Axialventilator entsprechende Funktionsweise auf. Der Grundkörper des Fräsers mit daran angeordneten Schaufelelementen weist dabei eine Drehachse auf, die parallel bzw. axial zum Luftstrom, der sich bei Rotation ausbildet, verläuft.

Als günstig wird angesehen, wenn die Krümmung des Schaufelelementes relativ zur Rotationsbewegung um die Rotationsachse im Wesentlichen rückwärts oder vorwärts ausgerichtet ist.

Insbesondere ist ein Verlauf der Krümmung derart ausgebildet ist, dass relativ zur Rotationsachse gesehen nach abschnittsweiser achsparalleler Strömung eine Umlenkung des Luftstromes um bis zu 90° erfolgt.

In einer vorteilhaften Ausgestaltung ist vorgesehen, dass der Fräskopf mindestens einen Bürstenring trägt, wobei insbesondere jedem Fräser (1, 1a, 1b) je ein Bürstenring zugeordnet ist.

Der Durchmesser dieses Bürstenringes ist größer als der Durchmesser des Fräsers. Geschickter Weise umgibt der Bürstenring den Fräser allseitig, wobei die Borsten der Bürste gegenüber der Bearbeitungsebene des Fräsers/Fräskopfes vorstehen. Der Vorteil einer solchen Ausgestaltung liegt darin, dass mit dem Bürstenring eine variable Abdeckung realisiert ist, die vermeidet, dass die abgelösten Späne in der Bearbeitungsmaschine ziellos verteilt werden. Die Borsten des Bürstenringes liegen am Profilstück an und werden bei Bedarf etwas verbogen und ergeben so einen Schutzvorhang. Die abgelösten Späne prallen auf die Innenseite des Bürstenringes, verlieren dort einen Teil, wenn nicht sogar den Großteil ihrer Bewegungsenergie, da diese an den elastischen Borsten abgebremst werden. Sie werden dann von dem einerseits durch den Fräskopf erzeugten Unterdruck und/oder dem Unterdruck der Absauganlage durch das Bearbeitungswerkzeug hindurch abgesaugt. Gleichzeitig verbessert der Bürstenring auch die Leitung des Unterdruckers, da der Bürstenring für den Luftfluss einen Widerstand darstellt, und der Luftstrom dann mit höherer Geschwindigkeit, an anderer Stelle geführt wird und effektiver ist.

Der jeweilige Fräser des erfindungsgemäßen Fräskopfes zeichnet sich in einer bevorzugten Weiterbildung dadurch aus, dass dieser auf seiner Stirnseite durch eine Stirnebene begrenzt ist und eine erste Flächennormale auf dem Schaufelelement in der Nähe der Stirnebene mit dieser einen ersten, spitzen Winkel einschließt und eine zweite Flächennormale auf dem Schaufelelement mit größerem axialem Abstand, bezogen auf die Rotationsachse, zur Stirnebene einen zum ersten Winkel flacheren zweiten Winkel einschließt. Insbesondere steht die gedachte Stirnebene senkrecht auf der Rotationsachse. Der Winkel zwischen der Flächennormalen des Schaufelelementes und der Stirnebene nimmt mit zunehmenden Abstand von der Stirnebene, was den Fußpunkt der Flächennormale betrifft, ab.

Eine als günstig angesehene Ausführungsform sieht vor, dass sich an der Schneidkante ein Spanabführraum anschließt, der zumindest von einer Schneidkantenträgerfläche begrenzt ist, dessen Flächennormale mit einer senkrecht zur Rotationsachse angenommenen Stirnebene einen spitzen Winkel einschließt.

Vorteilhaft ist als Rotationsantrieb des Fräsers ein Elektromotor, ein Riementrieb, ein Getriebe oder ein Kardanantrieb vorgesehen. Die letztlich gewählte Ausgestaltung des Antriebs richtet sich nach den am Fräser vorliegenden Anordnungsräumen für den Antrieb. Letztlich kann der gewählte Antrieb auch als vom Antrieb einer Bearbeitungsmaschine abgeleiteter Antrieb vorgesehen werden.

Eine Ausführungsform des Fräsers, die als günstig angesehen wird, sieht vor, dass am Fräser ein gegenüber einer Stirnebene des Fräsers senkrecht vorspringender Fingerfräser vorgesehen ist. Dieser Fingerfräser dient insbesondere dazu, am Profil vorgesehene Dichtung- oder Aufnahmenuten zu bearbeiten und diese frei zu fräsen. Der Fingerfräser ist dabei bevorzugt zentral in der Stirnfläche des Fräsers und/oder auf der Rotationsachse des Fräsers angeordnet. Der Fingerfräser ist dabei von Drehrichtung und Drehgeschwindigkeit des Fräsers abhängig. Gleichzeitig mit dem Einsatz des Fingerfräsers kann eine Bearbeitung der Flächen durch die Stirnseiten des Fräsers bzw. die dortigen Schneidkanten erfolgen. Selbstverständlich besteht auch die Möglichkeit, dass eine Bearbeitung mit der Stirnfläche des Fräsers auf den Schweißflächen des Profils und in einem nach- oder vorgelagerten Bearbeitungsschritt eine Bearbeitung mit dem Fingerfräser durchgeführt wird.
Erfindungsgemäß sind die Fräser dabei auf einer gemeinsamen Rotationsachse verwindungsfest zueinander angeordnet. Der erfindungsgemäße Fräskopf erlaubt die gleichzeitige Bearbeitung zweier parallel zueinander angeordneter Schweißflächen. Bei entsprechender Aufspannung der Profile in einer Spannebene kann somit eine definierte Bearbeitung erfolgen. Maßtoleranzen in den Profilen können effizient ausgearbeitet werden. In einem einzigen Arbeitsgang können somit zwei Flächen, insbesondere nachfolgend als Schweißflächen genutzte Flächen, gleichzeitig bearbeitet und für den nachfolgenden Schweißvorgang ohne Umspannung vorbereitet werden.

Als günstig wird angesehen, wenn beide Fräser jeweils einen Fingerfräser aufweisen, der gegenüber der Stirnflächen der Fräser vorspringt. Es kann somit auch bezüglich der Fingerfräser eine beiderseitige Bearbeitung mit dem Fräskopf durchgeführt werden. Der Fingerfräser ist dabei bevorzugt jeweils zentral in der Stirnfläche und günstiger Weise auf der gemeinsamen Rotationsachse der Fräser angeordnet.

Während auch eine nur einseitige Anordnung des Fingerfräsers am Fräskopf denkbar ist, wird es als günstig angesehen, wenn jedem Fräser ein Fingerfräser zugeordnet ist.

Der erfindungsgemäße Fräskopf zeichnet sich dadurch aus, dass die Fräser durch eine Verbindungscheibe axial, bezüglich der Rotationsachse, distanziert, verwindungsfest miteinander verbunden sind. Die Dicke der Verbindungscheibe definiert dabei den Abstand der Fräser und erlaubt dessen Einstellung.

Vorteilhaft ist, wenn sich die Schneidkanten der Fräser in entgegengesetzte Richtungen erstrecken, um eine gleichzeitige Bearbeitung der gegenüberliegend angeordneten Profilschweißflächen voll oderteilflächig zu ermöglichen.

Insbesondere verfügt der Fräskopf über einen gemeinsamen Antrieb für beide Fräser. Der Antrieb greift dabei bevorzugt an der Verbindungsscheibe an.

Der Fräskopf weist in einer bevorzugten Ausführungsform ein die Fräser aufnehmendes Gehäuse auf. Die Stirnseiten und/oder die Schneidkanten der Planfräser stehen dabei jeweils gegenüber den Seitenflächen des Gehäuses vor und ermögliche so zum einen einen Zugriff auf die Schneiden bzw. Schneidkanten zum anderen eine klare Definition des Materialeingriffs und der Abtragungstiefe während des Fräsvorganges.

Als günstig wird angesehen, wenn die Fräser einen Luftstrom in Richtung auf das Gehäuse bzw. ins Innere des Gehäuses erzeugen. Während des Fräsens abgetragene Späne werden somit von der zu bearbeitenden Profilfläche weggeführt und entweder im Inneren des Gehäuses gesammelt oder von dort abgesaugt.

Eine Ableitung von im Luftstrom mitgeführten Frässpänen im Gehäuse ist dabei bevorzugt vorgesehen.

Die Geometrie der Schaufelelemente sowie des Gehäuses oder der Gehäuseinnenseite sind dabei günstiger Weise derart ausgebildet, dass im Gehäuse eine Addition und/oder Ableitung der durch die Fräser bzw. Schaufelelemente erzeugten Luftströme erfolgt.

In einer bevorzugten Ausführungsform ist vorgesehen, dass der Antrieb im Gehäuse aufgenommen ist.

Als vorteilhafte wird angesehen, wenn die Richtung des Luftstroms einstellbar ist. Dabei sind insbesondere im Fräskopf mit den Schaufelelementen der Fräser in Wirkverbindung stehende Leitelemente, insbesondere Leitbleche vorgesehen.

In einer günstigen Ausführungsform ist vorgesehen, dass im Fräskopf eine Absaugeinrichtung für die abgetragenen Frässpäne vorhanden ist, wodurch die Freihaltung der späteren Schweißflächen von Frässpänen weiter verbessert wird.

Gleichermaßen von erfinderischer Bedeutung ist eine Bearbeitungsmaschine, insbesondere Kunststoffprofilbearbeitungs-maschine für die Bearbeitung und Verschweißung von Kunststoffprofilen, mit wenigstens einem Fräskopf wie zuvor definiert. Die Bearbeitungsmaschine kann dabei nur zum Fräsen oder zum Fräsen und nachfolgendem Schweißen verwendet werden.

Die erfindungsgemäße Bearbeitungsmaschine ist dabei derart ausgebildet, dass die Antriebsenergie für den wenigstens einen Fräskopf aus dem Antrieb der Bearbeitungsmaschine abgeleitet ist.

Als günstig wird angesehen, wenn der Fräskopf bewegbar, insbesondere linear verschiebbar angeordnet ist. Dabei ist der Fräskopf relativ zu einer Bearbeitungsebene verschiebbar, insbesondere anhebbar, absenkbar oder verschwenkbar angeordnet. Je nach Position der zu bearbeitenden Profile kann somit eine Zuführung des Fräskopfes die Bearbeitungsposition erfolgen.

In der Bearbeitungsmaschine sind insbesondere wenigstens zwei, bevorzugt vier Fräsköpfe vorgesehen. Ausgehend von insgesamt vier Profilabschnitten, die benötigt werden, um einen rechteckigen Rahmen zu bilden, kann mit dieser Ausgestaltung der Bearbeitungsmaschine eine gleichzeitige Bearbeitung sämtlicher Profilabschnitte erfolgen. In der Bearbeitungsmaschine werden mittels des Fräskopfes die zu verbindenden Schweißflächen von unter einem Winkel gegenüberliegenden bzw. aufgespannten Profilen gleichzeitig bearbeitet. Bei der gleichzeitigen Bearbeitung werden Maßtoleranzen, die sich beim Zuschnitt der Profilabschnitte ergeben, ausgeglichen. Eine deckungsgleiche und insbesondere wulstfreie Verschweißung der Profile sowie der im Innern der Profile vorhandenen Stege wird somit ermöglicht.

Als günstig wird angesehen, wenn in der Bearbeitungsmaschine eine Steuereinrichtung für den Fräskopf oder die Fräsköpfe vorgesehen ist. Diese erlaubt bevorzugt eine synchrone oder versetzte Ansteuerung der Fräsköpfe.

Die gleichzeitige Bearbeitung der Oberflächen zweier Profile wird dadurch verbessert, dass der Abstand zwischen dem oder den zu bearbeitenden Werkstück(en) und dem Fräskopf und/oder den Fräsern bevorzugt einstellbar ist.

Als günstig wird angesehen, wenn die Bearbeitungsmaschine eine die abgetragenen Frässpäne absaugende Absaugeinrichtung umfasst, die insbesondere mit dem Rotationsantrieb des Fräskopfes gekoppelt ist.

Vorteilhafterweise ist in der erfindungsgemäßen Bearbeitungsmaschine in räumlicher Nähe zum Fräskopf auch ein Heizspiegel vorgesehen. Dieser kann beispielsweise mit dem Fräskopf gekoppelt werden. Wenn in einem ersten Bearbeitungsschritt die fräsende Bearbeitung der Profile erfolgt, kann unmittelbar danach das Zuführen des Heizspiegels zu den Schweißflächen durchgeführt werden. Die Zuführung erfolgt dann im Wege einer Linearbewegung von Fräskopf und Heizspiegel.

In den Zeichnungen ist die Erfindung in Ausführungsbeispielen schematisch dargestellt. Es zeigt:
- Fig. 1: eine Detailansicht einer Bearbeitungsmaschine in perspektivischer Darstellung
- Fig. 2: einen Fräskopf in perspektivischer Darstellung, und
- Fig. 3: eine weitere bevorzugte Ausführungsform des Fräskopfes.

In den Figuren sind gleiche oder einander entsprechende Elemente jeweils mit den gleichen Bezugszeichen bezeichnet und werden daher, sofern nicht zweckmäßig, nicht erneut beschrieben. Die in der gesamten Beschreibung enthaltenen Offenbarungen sind sinngemäß auf gleiche Teile mit gleichen Bezugszeichen bzw. gleichen Bauteilbezeichnungen übertragbar. Auch sind die in der Beschreibung gewählten Lageangaben, wie z. B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

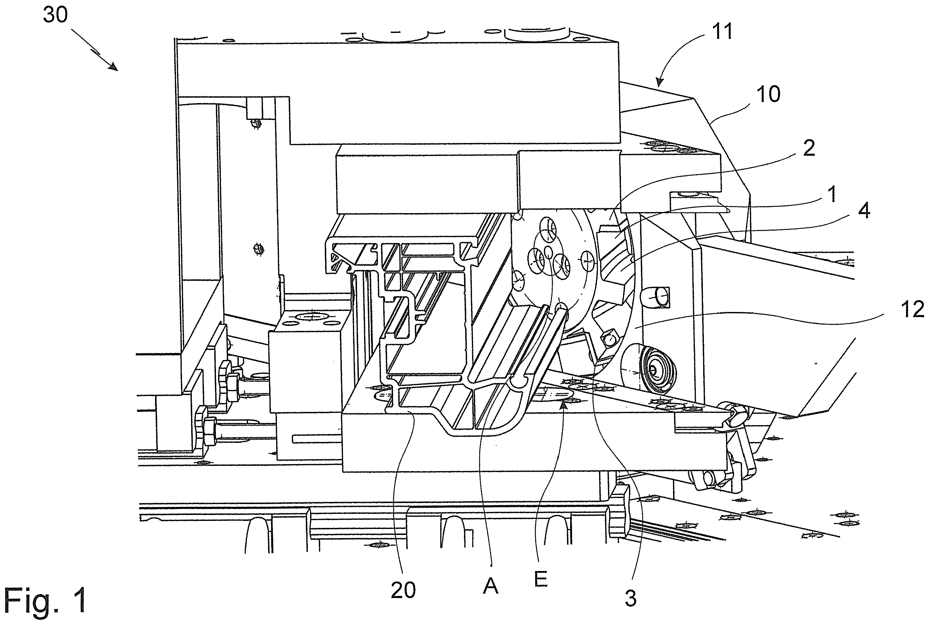

Fig. 1 zeigt ein Detail einer Bearbeitungsmaschine 30. Diese ist als Kunststoffprofilbearbeitungsmaschine für die Bearbeitung und Verschweißung von Kunststoffprofilen vorgesehen. Erkennbar ist ein Fräser 1, der Teil eines erfindungsgemäßen Fräskopfes 10 mit zwei entsprechenden Fräsern 1 ist. Die Fräser 1 sind in einem in der Bearbeitungsmaschine 30 linear verschiebbaren Gehäuse 11 angeordnet. Die dem Profil 20, das durch den jeweiligen Fräser 1 bearbeitet wird, zugewandte Seitenfläche 12 des Gehäuses 11 weist eine Ausnehmung auf, gegenüber der der Fräser 1 bzw. die Schneidkanten 3 an den am Fräser 1 vorgesehenen Schneidenträgern 2 vorsteht/vorstehen. Das Profil 20 ist in der Bearbeitungsmaschine 30 aufgespannt und dort fixiert. Das Profil 20, das in der Regel als Abschnitt eines Profilstabes zur Verfügung gestellt wird, weist unter Umständen Maßtoleranzen auf, die bei der Bearbeitung mit dem Fräser 1 ausgeglichen werden. Die Bearbeitungsebene E, in der das Profil 20 aufgespannt ist, ist durch die Bearbeitungsmaschine 30 definiert. Ebenfalls definiert ist der Abstand zwischen den Profilen 20, der sich aus den jeweiligen Sollwerten für den fertigen Rahmen ergibt.

Der linear verschiebbare Fräskopf 10 mit den daran angeordneten Fräsern 1 wird in den definierten Abstand zwischen den Profilen 20 geführt. Bei Rotation der Fräser 1 um die Rotationsachse A wird durch die Schneidkanten 3 ein Übermaß abgetragen und somit ein maßgenauer Profilabschnitt zur Verfügung gestellt, und eine passgenaue Verbindung zweier Profile 20 ermöglicht. Aufgrund dessen, dass die Toleranzen bereits durch den jeweiligen Fräser 1 ausgeglichen werden, muss dieser Ausgleich nicht mehr während des Schweißens der Profile 20 erfolgen. Als Resultat ergibt sich somit eine verringerte Schweißwulst und eine wesentlich stabilere Verbindung der Profile 20, da die Stege im Innern des Profils 20 bzw. die die Außenkontur bildenden Stege des Profils 20 passgenau verschweißt werden können. Die thermisch bedingte Strukturänderung, die mit einer Destabilisierung im Bereich der Schweißflächen einhergeht wird somit, ebenso wie die Wulstbildung bei Verschweißung, wesentlich reduziert. Die Profile 20 sind in der Bearbeitungsebene E aufgespannt und dort fixiert. Nach der Bearbeitung durch die Fräser werden diese aus dem zwischen den Profilen 20 vorgesehenen Bearbeitungsabstand bzw. Zwischenraum entnommen und im Gegenzug ein in Figur 1 nicht dargestellter Heizspiegel an die zur verbindenden Stirnflächen der Profilabschnitte herangeführt. Nach partieller Erweichung des stirnseitigen Materials kann nach Entnahme des Heizspiegels die Verschweißung der Profilabschnitte durchgeführt werden, in dem diese durch die Bearbeitungsmaschine 30 aufeinander zu bewegt und kontaktiert werden.

Während der Fräskopf 10 in der in Figur 1 dargestellten Ausführungsform linear verschiebbar angeordnet ist, besteht selbstverständlich auch die Möglichkeit einer verschwenkbaren Anordnung des Fräskopfes 10 relativ zur Bearbeitungsebene E.

Je nach Konfiguration der Bearbeitungsmaschine 30 weist diese wenigstens einen, insbesondere zwei, bevorzugt vier Fräsköpfe 10 auf.

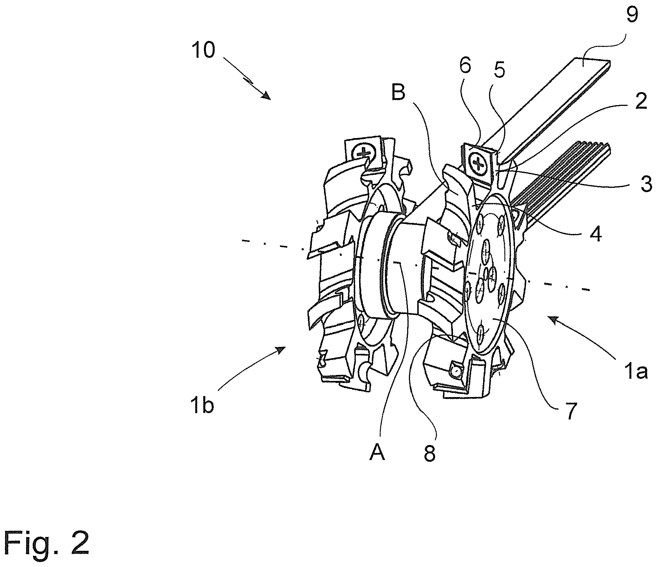

Fig. 2 zeigt einen Fräskopf 10, der insgesamt zwei Fräser 1 aufweist. Diese sind auf einer gemeinsamen Rotationsachse A angeordnet und werden im Ausführungsbeispiel durch einen Riementrieb 9 angetrieben. Der Antrieb ist dabei aus dem Antrieb einer den Fräskopf 10 aufweisenden Bearbeitungsmaschine 30 abgeleitet. Der Fräskopf 10 verfügt über einen Grundkörper 7, an dessen Umfang Schaufelelemente 4 sowie Schneidenträger 2 im Wechsel angeordnet sind. Die Schneidenträger 2 tragen im Ausführungsbeispiel die Schneidelemente 6, die im Ausführungsbeispiel als Wendeschneidplatten ausgebildet sind. Die Schneidelemente 6 verfügen über Schneidkanten 3, die gegenüber der Abschlusskante 5 der Schneidenträger 2 vorstehen. Der hier dargestellte Fräskopf 10 weist insgesamt zwei Stirnplanfräser auf, d.h. die gegenüber der Abschlusskante 5 axial vorstehenden Schneidkanten 3 greifen bei der Bearbeitung in das abzutragende Material ein und zerspanen dieses. Die Bearbeitung erfolgt somit über die Stirnflächen der beiden Fräser. Die Schaufelelemente 4 weisen eine Krümmung B auf, die dazu dient bei Rotation der Fräser 1a, 1b einen Luftstrom zu generieren, der die durch die Schneidkanten 3 abgetragenen Frässpäne von der zu bearbeitenden Fläche abzieht und in das den Fräskopf 10 in der Regel umschließende Gehäuse (nicht dargestellt) einsaugt. Diese Sogwirkung wird durch die Krümmung B begünstigt bzw. bewirkt.

Die Krümmung B des Schaufelelementes 4 ist dabei relativ zur Rotationsbewegung um die Rotationsachse A im Wesentlichen rückwärts ausgerichtet. Im Allgemeinen ist ein Verlauf der Krümmung B derart ausgebildet, dass relativ zur Rotationsachse A gesehen, nach abschnittsweiser achsparalleler Strömung eine Umlenkung des Luftstromes um bis zu 90° erfolgt. Die Fräser 1a, 1b sind auf ihrer Stirnseite durch eine Stirnebene begrenzt, und eine erste Flächennormale auf dem Schaufelelement 4 in der Nähe der Stirnebene schließt mit dieser einen ersten, spitzen Winkel ein, während eine zweite Flächennormalen auf dem Schaufelelement 4 mit größerem axialem Abstand, bezogen auf die Rotationsachse A, zur Stirnebene einen zum ersten Winkel flacheren zweiten Winkel einschließt.

An der Schneidkante 5 schließt sich ein Spanabführraum an, dessen Flächennormale mit einer senkrecht zur Rotationsachse A angenommenen Stirnebene einen spitzen Winkel einschließt.

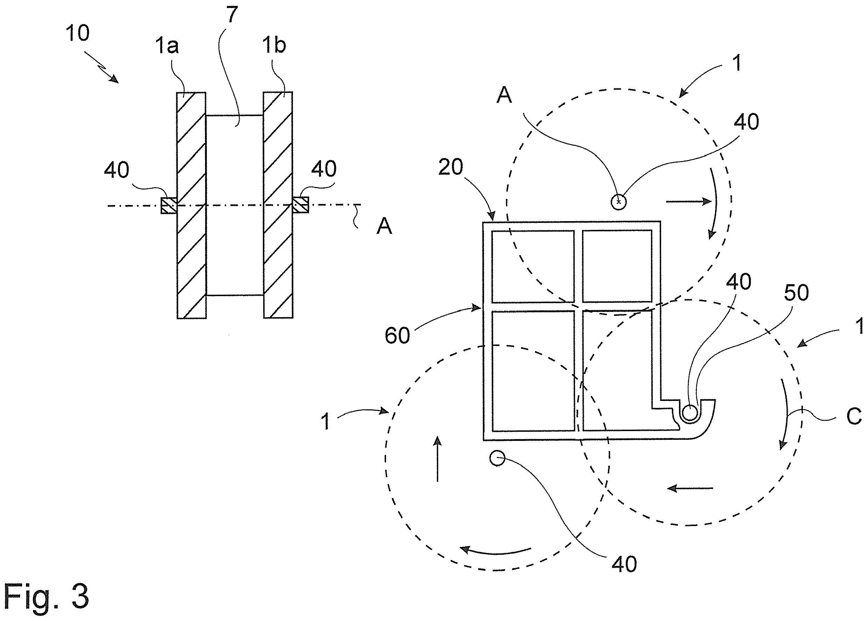

Figur 3 zeigt den Fräskopf 10 in schematischer Darstellung. Neben den beiden Fräsen 1a, 1b, die beiderseits des Grundkörper 7 angeordnet sind, verfügt der hier gezeigte Fräskopf 10 über auf der Rotationsachse A vorgesehene und zentral an den beiden Fräsern 1a, 1b angeordnete Fingerfräser 40. Diese dienen unter anderem dazu, die Aufnahmenut 50 bei Bearbeitung der Stirnflächen des Profils 20 frei zu fräsen. Selbstverständlich kann mit den Fingerfräsern 40 auch ein Umfangsfräsen durchgeführt werden. Dies bedingt eine entsprechende Steuerung des Fräskopfes 10 und eine Bewegung des Fräskopfes 10 relativ zum zu bearbeitenden Werkstück.

Im vom Betrachter aus gesehen rechten Teil der Figur 3 dargestellt ist die Bewegung des Fräskopfes 10 bei einer vorgesehenen Bearbeitung und der Ausgestaltung der Fräser 1a, 1b mit aufgesetztem Fingerfräser 40. Der Fräskopf 10 wird in Drehrichtung C rotiert und an den Stirnflächen des Profils 20 entlang geführt. Dabei wird eine teilflächige Bearbeitung bei relativ zur Stirnfläche gerichteter Bewegung des Fräskopfes 10 durchgeführt. Nach einer ersten horizontalen Bewegung (relativ zur Ausrichtung des Profils 20 gesehen) folgt eine zu der ersten Bewegungsrichtung senkrechte Bewegung des Fräskopfes 10 und die weitergehende Bearbeitung der Stirnfläche. Der Fingerfräser 40 wird dann auf die Aufnahmenut 50 zu bewegt und in diese eingesenkt. Durch Bewegung des Fräskopfes 10 wird die Aufnahmenut 50 freigefräst. Beim Schweißen der Profile 20 kann somit erweichtes Material in das Innere des Profils 20 einfließen. Die zumindest auf Länge des Fingerfräsers 40 freigestellte Aufnahmenut 50 lässt dieses Einfließen zu. Ebenfalls entfernt wird dabei die in der Aufnahmenut 50 eingelegte Dichtung, die in der Regel aus einem nicht-schweißbaren Material besteht.

Nach Abschluss des Fräsvorganges mit dem Fingerfräser 40 und Ausheben des Fingerfräsers 40 aus der Aufnahmenut 50 erfolgt eine wiederum horizontale Bewegung des Fräskopfes 10, um auch die verbleibende Teilfläche der Stirnseite des Profils 20 zu bearbeiten und eventuell vorhandene Maßtoleranzen auszugleichen. Der Durchmesser des Fräsers 1a, 1b ist dabei so gewählt, dass während der in Fig. 3 dargestellten Bewegung des Fräskopfes 10 die gesamte Stirnfläche des Profils 20 bearbeitet wird. Es ergibt sich somit ein Überschneidungsbereich 60 in dem sich die Flächenbewegung der Fräser 1a, 1b überschneiden.

## Patentansprüche

1. Fräskopf umfassend zwei Fräser (1, 1a, 1b) wobei die Fräser (1, 1a, 1b) für die spanabhebende Bearbeitung von Werkstücken jeweils, mindestens eine Rotationsachse (A) und wenigstens einen Schneidenträger (2) mit mindestens einer Schneidkante (3) umfassen, wobei an den Fräsern (1, 1a, 1b) jeweils wenigstens ein eine Krümmung (B) aufweisendes Schaufelelement (4) vorgesehen ist und das Schaufelelement (4) bei Rotation des jeweiligen Fräsers (1, 1a, 1b) um seine Rotationsachse (A) einen Luftstrom zur Abfuhr abgetragener Frässpäne erzeugt und die Fräser parallel zueinander angeordnet sind, **dadurch gekennzeichnet, dass** die Fräser (1, 1a, 1b) des Fräskopfes als Stirnplanfräser ausgebildet sind, die Schneiden an ihren dem zu bearbeitenden Profil zugewandten Stirnflächen aufweisen, wobei die Fräser (1, 1a, 1b) durch eine Verbindungscheibe axial, bezüglich der Rotationsachse (A), distanziert, verwindungsfest miteinander verbunden sind.

2. Fräskopf nach Anspruch 1, **dadurch gekennzeichnet, dass** Schneidenträger (2) und Schaufelelemente (4) als gesonderte Elemente ausgebildet und insbesondere im Wechsel am jeweiligen Fräser (1, 1a, 1b) angeordnet vorgesehen sind oder der Schneidenträger (2) selbst als Schaufelelement (4) ausgebildet ist oder einen als Schaufelelement (4) dienenden Funktionsabschnitt aufweist.

3. Fräskopf nach einem der vorhergehenden Ansprüche, **dadurch gekennzeichnet, dass** die Schneide in sich eben oder gewölbt ist und/oder der Schneidenträger sich radial zur Rotationsachse erstreckt.

4. Fräskopf nach einem der vorhergehenden Ansprüche, **gekennzeichnet durch** einen Grundkörper (7), wobei Schneidenträger (2) und Schaufelelemente (4) am Umfang (8) des Grundkörpers (7) angeordnet sind und/oder das Schaufelelement (4) sich am Schneidenträger (2) radial erstreckend angeordnet ist.

5. Fräskopf nach einem der vorhergehenden Ansprüche, **dadurch gekennzeichnet, dass** das Schaufelelement (4) in sich gekrümmt ist.

6. Fräskopf nach einem der vorhergehenden Ansprüche, **dadurch gekennzeichnet, dass** die Krümmung (B) des Schaufelelementes (4) relativ zur Rotationsbewegung um die Rotationsachse (A) im Wesentlichen rückwärts oder vorwärts ausgerichtet ist und/oder ein Verlauf der Krümmung (B) derart ausgebildet ist, dass relativ zur Rotationsachse (A) gesehen nach abschnittsweiser achsparalleler Strömung eine Umlenkung des Luftstromes um bis zu 90° erfolgt.

7. Fräskopf nach einem der vorhergehenden Ansprüche, **dadurch gekennzeichnet, dass** der jeweilige Fräser (1, 1a, 1b) auf seiner Stirnseite durch eine Stirnebene begrenzt ist, und eine erste Flächennormale auf dem Schaufelelement (4) in der Nähe der Stirnebene mit dieser einen ersten, spitzen Winkel einschließt, eine zweite Flächennormalen auf dem Schaufelelement (4) mit größerem axialem Abstand, bezogen auf die Rotationsachse (A), zur Stirnebene einen zum ersten Winkel flacheren zweiten Winkel einschließt.

8. Fräskopf nach einem der vorhergehenden Ansprüche, **dadurch gekennzeichnet, dass** sich an der Schneidkante (5) ein Spanabführraum anschließt, der zumindest von einer Schneidkantenträgerfläche begrenzt ist, dessen Flächennormale mit einer senkrecht zur Rotationsachse (A) angenommenen Stirnebene einen spitzen Winkel einschließt und/oder sich die Schneidkanten (3) der Fräser (1, 1a, 1b) in entgegengesetzte Richtungen erstrecken.

9. Fräskopf nach einem der vorhergehenden Ansprüche, **dadurch gekennzeichnet, dass** ein gegenüber einer Stirnebene mindestens eines der Fräser (1, 1a, 1b) senkrecht vorspringender Fingerfräser (40) vorgesehen ist und/oder der Fräskopf mindestens einen Bürstenring trägt, wobei insbesondere jedem Fräser (1, 1a, 1b) je ein Bürstenring zugeordnet ist.

10. Fräskopf nach einem der vorhergehenden Ansprüche, **dadurch gekennzeichnet, dass** ein die Fräser (1, 1a, 1b) aufnehmendes Gehäuse (11) vorgesehen ist, wobei die Stirnseiten und/oder die Schneidkanten der Fräser (1, 1a, 1b) jeweils gegenüber den Seitenflächen (12) des Gehäuses (11) vorstehen und/oder eine Absaugeinrichtung für die abgetragenen Frässpäne vorgesehen ist.

11. Fräskopf nach Anspruch 10, **dadurch gekennzeichnet, dass** die Fräser (1, 1a, 1b) einen Luftstrom in Richtung auf das Gehäuse (11) bzw. ins Innere des Gehäuse (11) erzeugen und/oder eine Ableitung von im Luftstrom mitgeführten Frässpänen im Gehäuse (11) vorgesehen ist.

12. Bearbeitungsmaschine, insbesondere Kunststoffprofilbearbeitungsmaschine für die Bearbeitung und Verschweißung von Kunststoffprofilen, mit wenigstens einem Fräskopf (10) gemäß einem der vorhergehenden Ansprüche.

13. Bearbeitungsmaschine nach Anspruch 12, **dadurch gekennzeichnet, dass** der Fräskopf (10) relativ zu einer Bearbeitungsebene (E) verschiebbar, insbesondere anhebbar, absenkbar oder verschwenkbar angeordnet ist.

14. Bearbeitungsmaschine nach einem der vorherigen Ansprüche 12 bis 13, **dadurch gekennzeichnet, dass** die Bearbeitungsmaschine (30) eine die abgetragenen Frässpäne absaugende Absaugeinrichtung umfasst, die insbesondere mit dem Rotationsantrieb des Fräskopfes (10) gekoppelt ist und/oder in räumlicher Nähe zum Fräskopf (10) auch ein Heizspiegel vorgesehen ist.

## Claims

1. Milling head including two milling tools (1, la, lb), wherein the milling tools (1, la, 1b) for the machining processing of workpieces include in each case one rotational axis (A) and at least one cutter carrier (2) having at least one cutting edge (3), wherein on the milling tools (1, la, 1b) is provided in each case at least one vane element (4) with a curvature (B) and the vane element (4) during the rotation of the respective milling tool (1, la, 1b) about its rotational axis (A) generates an airflow for the removal of abraded shavings and the milling tools are disposed parallel to one another, **characterised in that** the milling tools (1, la, 1b) of the milling head are designed as front-facing cutters, which have cutters on their end faces facing towards the profile to be processed, wherein the milling tools (1, la, 1b) are connected axially and distanced from the rotational axis (A) in a twist-resistant manner with one another by means of a connecting disc.

2. Milling head according to claim 1, **characterised in that** cutter carrier (2) and vane elements (4) are provided formed as separate elements and are disposed in particular alternately on the respective milling tool (1, la, 1b) or the cutter carrier (2) is itself designed as a vane element (4) or has a functional portion serving as a vane element (4).

3. Milling head according to any of the preceding claims, **characterised in that** the cutting edge is intrinsically flat or curved and/or the cutter carrier extends radially to the rotational axis.

4. Milling head according to any of the preceding claims, **characterised by** a base body (7), wherein cutter carrier (2) and vane elements (4) are disposed on the circumference (8) of the base body (7) and/or the vane element (4) is disposed extending radially on the cutter carrier (2).

5. Milling head according to any of the preceding claims, **characterised in that** the vane element (4) is intrinsically curved itself.

6. Milling head according to any of the preceding claims, **characterised in that** the curvature (B) of the vane element (4) is oriented in relation to the rotational movement about the rotational axis (A) substantially backwards or forwards and/or a course of the curvature (B) is formed such that, viewed in relation to the rotational axis (A), a deviation of the air flow of up to 90° takes place after a flow which is partially axis-parallel.

7. Milling head according to any of the preceding claims, **characterised in that** the respective milling tool (1, la, 1b) is delimited on its end face by a front plane, and encloses a first surface normal on the vane element (4) near the front plane with this one first, acute angle, encloses a second surface normal on the vane element (4) with greater axial spacing, related to the rotational axis (A), to the front plane a second, shallower angle than the first angle.

8. Milling head according to any of the preceding claims, **characterised in that** a chip removal space adjoins on the cutting edge (5), which chip removal space is delimited at least by a cutting edge support surface, the surface normal of which encloses an acute angle with an assumed front plane perpendicular to the rotational axis (A) and/or the cutting edges (3) of the milling tools (1, la, 1b) extend in opposite directions.

9. Milling head according to any of the preceding claims, **characterised in that** a finger milling tool (40) is provided which protrudes perpendicularly with respect to a front plane of at least one of the milling tools (1, la, 1b) and/or the milling head bears at least one brush ring, wherein in particular in each case one brush ring is assigned to each milling tool (1, la, 1b).

10. Milling head according to any of the preceding claims, **characterised in that** a housing (11) receiving the milling tools (1, la, 1b) is provided, wherein the end faces and/or the cutting edges of the milling tools (1, la, 1b) protrude in each case with respect to the lateral surfaces (12) of the housing (11) and/or a suction device is provided for the abraded shavings.

11. Milling head according to claim 10, **characterised in that** the milling tools (1, la, 1b) generate an airflow in the direction onto the housing (11) or into the interior of the housing (11) and or a deflection of shavings carried in the air flow is provided in the housing (11).

12. Processing machine, in particular plastic material profile processing machine for the processing and welding of plastic material profiles, having at least one milling head (10) according to any of the preceding claims.

13. Processing machine according to claim 12, **characterised in that** the milling head (10) is disposed displaceably, in particular able to be raised, lowered or pivoted, in relation to a processing plane (E).

14. Processing machine according to any of the preceding claims 12 to 13, **characterised in that** the processing machine (30) comprises a suction device suctioning the abraded shavings, which suction device is in particular coupled with the rotational drive of the milling head (10) and/or also a heat reflector is provided in spatial proximity to the milling head (10).

## Revendications

1. Tête de fraisage comprenant deux fraises (1, la, 1b) dans laquelle les fraises (1, la, 1b) comprennent pour l'usinage par enlèvement de copeaux de pièces à usiner respectivement, au moins un axe de rotation (A) et au moins un porte-lame (2) avec au moins une arête de coupe (3), dans laquelle respectivement au moins un élément d'aube (4) présentant une courbure (B) est prévu au niveau des fraises (1, la, 1b) et l'élément d'aube (4) génère lors de la rotation de la fraise (1, la, 1b) respective autour de son axe de rotation (A) un courant d'air pour l'évacuation de copeaux de fraisage enlevés et les fraises sont agencées parallèlement l'une à l'autre, **caractérisée en ce que** les fraises (1, la, 1b) de la tête de fraisage sont réalisées en tant que fraises planes frontales, qui présentent des lames au niveau de leurs surfaces frontales tournées vers le profil à traiter, dans laquelle les fraises (1, la, 1b) sont reliées l'une à l'autre par un disque de liaison axialement, à distance par rapport à l'axe de rotation (A), de manière résistante à la torsion.

2. Tête de fraisage selon la revendication 1, **caractérisée en ce que** le porte-lame (2) et les éléments d'aube (4) sont réalisés en tant qu'éléments séparés et sont prévus agencés en particulier alternativement au niveau de la fraise (1, la, 1b) respective ou le porte-lame (2) est réalisé lui-même en tant qu'élément d'aube (4) ou présente une section fonctionnelle servant d'élément d'aube (4).

3. Tête de fraisage selon l'une quelconque des revendications précédentes, **caractérisée en ce que** la lame est plane ou courbée en soi et/ou le porte-lame s'étend radialement par rapport à l'axe de rotation.

4. Tête de fraisage selon l'une quelconque des revendications précédentes, **caractérisée par** un corps de base (7), dans laquelle le porte-lame (2) et les éléments d'aube (4) sont agencés sur la circonférence (8) du corps de base (7) et/ou l'élément d'aube (4) est agencé en s'étendant radialement au niveau du porte-lame (2).

5. Tête de fraisage selon l'une quelconque des revendications précédentes, **caractérisée en ce que** l'élément d'aube (4) est courbé en soi.

6. Tête de fraisage selon l'une quelconque des revendications précédentes, **caractérisée en ce que** la courbure (B) de l'élément d'aube (4) est orientée sensiblement vers l'arrière ou vers l'avant par rapport au mouvement de rotation autour de l'axe de rotation (A) et/ou une allure de la courbure (B) est réalisée de sorte que vu par rapport à l'axe de rotation (A) après l'écoulement parallèle à l'axe par section, une déviation du courant d'air de jusqu'à 90° a lieu.

7. Tête de fraisage selon l'une quelconque des revendications précédentes, **caractérisée en ce que** la fraise (1, la, 1b) respective est limitée sur son côté frontal par un plan frontal, et une première normale à la surface sur l'élément d'aube (4) forme à proximité du plan frontal avec celui-ci un premier angle aigu, une deuxième normale à la surface sur l'élément d'aube (4) forme à une plus grande distance axiale, par rapport à l'axe de rotation (A), du plan frontal un deuxième angle plus plat que le premier angle.

8. Tête de fraisage selon l'une quelconque des revendications précédentes, **caractérisée en ce qu'**un espace d'évacuation des copeaux, qui est limité au moins par une surface support d'arête de coupe, dont la normale à la surface forme avec un plan frontal supposé perpendiculaire à l'axe de rotation (A) un angle aigu et/ou les arêtes de coupe (3) des fraises (1, la, 1b) s'étendent dans des directions opposées, se raccorde à l'arête de coupe (5).

9. Tête de fraisage selon l'une quelconque des revendications précédentes, **caractérisée en ce qu'**une fraise à queue (40) en saillie perpendiculairement par rapport à un plan frontal d'au moins une des fraises (1, la, 1b) est prévue et/ou la tête de fraisage porte au moins une brosse circulaire, dans laquelle respectivement une brosse circulaire est associée en particulier à chaque fraise (1, la, 1b).

10. Tête de fraisage selon l'une quelconque des revendications précédentes, **caractérisée en ce qu'**un boîtier (11) recevant les fraises (1, la, 1b) est prévu, dans laquelle les côtés frontaux et/ou les arêtes de coupe des fraises (1, la, 1b) font saillie respectivement des surfaces latérales (12) du boîtier (11) et/ou un dispositif d'aspiration est prévu pour les copeaux de fraisage enlevés.

11. Tête de fraisage selon la revendication 10, **caractérisée en ce que** les fraises (1, la, 1b) génèrent un courant d'air en direction du boîtier (11) ou dans l'intérieur du boîtier (11) et/ou une dérivation de copeaux de fraisage emportés dans le courant d'air est prévue dans le boîtier (11).

12. Machine d'usinage, en particulier machine d'usinage de profil en plastique pour l'usinage et le soudage de profils en plastique, avec au moins une tête de fraisage (10) selon l'une quelconque des revendications précédentes.

13. Machine d'usinage selon la revendication 12, **caractérisée en ce que** la tête de fraisage (10) est agencée de manière à pouvoir être déplacée, en particulier soulevée, abaissée ou pivotée par rapport à un plan d'usinage (E).

14. Machine d'usinage selon l'une quelconque des revendications précédentes 12 à 13, **caractérisée en ce que** la machine d'usinage (30) comprend un dispositif d'aspiration aspirant les copeaux de fraisage enlevés, qui est couplé en particulier à l'entraînement en rotation de la tête de fraisage (10) et/ou un miroir de soudage est aussi prévu à proximité spatiale de la tête de fraisage (10).
